# EUROPÄISCHE PATENTSCHRIFT

(11) **EP 3 025 802 B1**
(45) Veröffentlichungstag und Bekanntmachung des Hinweises auf die Patenterteilung: **12.05.2021**
(21) Anmeldenummer: 14004035.3
(22) Anmeldetag: 28.11.2014
(51) Int. Cl.: B21D 22/16

(54) **Vorrichtung und Verfahren zum Drückwalzen von Werkstücken**
Device and method for pressure rolling workpieces
Dispositif et procédé pour le fluotournage des pièces à usiner

(43) Veröffentlichungstag der Anmeldung: 01.06.2016
(73) Patentinhaber: REPKON Machine and Tool Industry and Trade Inc., 34980 Sile - Istanbul (TR)
(72) Erfinder: Köstermeier, Karl-Heinz, 33378 Rheda-Wiedenbrück (DE)
(74) Vertreter: Schober, Mirko

(56) Entgegenhaltungen:
- EP-A1- 2 210 682
- WO-A1-2014/044396
- DD-A1- 270 873
- JP-A- S57 112 911
- US-A1- 2008 314 113

## Beschreibung

Die Erfindung betrifft eine Vorrichtung und ein Verfahren zum Drückwalzen hohlkörperförmiger Werkstücke nach den Oberbegriffen der unabhängigen Ansprüche.

Vorrichtungen und Verfahren zum Drückwalzen sind beispielsweise aus EP 2 127 775 bekannt. Bei den in Rede stehenden Verfahren werden durch die plastische Umformung von Vorformen bzw. Halbzeugen hohlkörperförmige, vorzugsweise rotationssymmetrische und/oder drehsymmetrische Werkstücke gefertigt. Dabei handelt es sich bei dem Drückwalzen insbesondere um ein Kaltumformverfahren, d.h. ein Verfahren, das unterhalb der Rekristallisationstemperatur des umzuformenden, insb. metallischen Werkstoffs des Werkstücks durchgeführt wird. Besonders bevorzugt werden der Vorrichtung die Werkstücke bei Raumtemperatur zugeführt, so dass sich die Temperatur während der Durchführung des Drückwalzverfahrens, ausgehend von der Zuführtemperatur der Werkstücke, lediglich infolge der Erwärmung die durch die innere Reibung des plastisch umgeformten Materials während der Umformung erzeugt wird, steigert.

Die Umformwirkung bei Verfahren und Vorrichtungen der in Rede stehenden Art wird durch ein inneres und ein äußeres Umformwerkzeug erzeugt, die an der Innenkontur und der Außenkontur des Hohlkörper förmigen Werkstücks angreifen. Dabei übt das äußere Umformwerkzeug einen Druck auf die Außenkontur des Werkstücks aus, welches sich wiederum mit seiner Innenkontur an dem inneren Umformwerkzeug abstützt.

Durch den so zwischen den Umformwerkzeugen aufgebauten Druck bildet sich eine Umformzone zwischen den Werkzeugen aus, in der der Werkstoff des Werkstücks plastifiziert wird und zu fließen beginnt. Das Werkstück rotiert dabei um eine Werkstückachse und wird in einer Vorschubbewegung relativ zu den äußeren und/oder inneren Umformwerkzeugen entlang der Werkstückachse verfahren. Durch die Überlagerung der Rotation und der Vorschubbewegung wandert die Umformzone mit dem fließenden Werkstück quasi in einer spiralförmigen Bewegung durch das Werkstück. Der Werkstoff in der Umformzone fließt dabei relativ zur Werkstückachse in axialer Richtung, in radialer Richtung und/oder in der Umfangsrichtung des Werkstücks um die Werkzeugachse.

Mit den Verfahren und Vorrichtungen der in Rede stehenden Art lassen sich nicht nur der Innendurchmesser, der Außendurchmesser und/oder die Wandstärke des Werkstücks beeinflussen bzw. verändern, es ist auch möglich, spezielle Konturen auszuformen. So können insbesondere an der Innenkontur des Werkstücks beispielsweise Verstärkungsrippen, Verzahnungen und/oder sonstige Profilierungen angeformt werden.

Bei bekannten Verfahren und Vorrichtungen der in Rede stehenden Art wird das Werkstück dabei beispielsweise, wie in EP 2 127 775 beschrieben, axial verspannt, wobei ein entsprechendes Werkstücklager und ein Werkstückwiderlager an beiden Enden des Werkstücks angreifen. Alternativ und/oder ergänzend ist jedoch auch der Einsatz eines Spannfutters denkbar. Nach dem gattungsgemäßen Stand der Technik, wie beispielsweise in US 2008 314 113 A1, wird das Werkstück durch die vorgenannten Spannmittel nicht nur fixiert, sondern auch in Rotation versetzt, d.h. der Rotationsantrieb der Vorrichtung ist regelmäßig in einem Spindelkasten aufgenommen und wirkt über die jeweils verwendeten Spannmittel direkt auf das Werkstück.

Dabei müssen die Antriebe eine nicht unerhebliche Antriebsleistung sowie ein entsprechend hohes Drehmoment aufbringen, um die angestrebte Verformung des Werkstücks zu ermöglichen. Dabei muss die Antriebseinrichtung zudem regelmäßig verfahrbar sein, um den Vorschub entlang der Werkstückachse zu ermöglichen. Die resultierenden leistungsstarken Antriebe stellen einen erheblichen Kostenfaktor im Hinblick auf die gesamte Vorrichtung bzw. das Verfahren dar.

Die JP S57 112 911 A offenbart einen Antrieb, der über das äußere Umformwerkzeug eingebracht wird. Dadurch verringert sich der erforderliche Energieeintrag erheblich.

Nachteil aller bisher bekannten Drückwalzvorrichtungen ist die Standzeit, insbesondere beim Werkstückwechsel, die die Auslastung der Vorrichtung und damit deren Wirtschaftlichkeit verringern.

Die in DD 270 873 A1 offenbarte Vorrichtung zeigt eine Tandemanordnung von Drückwalzen. Zwei nebeneinander angeordnete, jeweils angetriebene innere Umformwerkzeuge nehmen jeweils ein Werkstück auf. Gleichzeitig stützen sie die Drückwalze der jeweils anderen Anordnung von innerem Werkzeug und Werkstück. So können simultan auf der Vorrichtung zwei Werkzeuge bearbeitet werden.

Eine derartige Vorrichtung führt zwar zu einer Raumeinsparung, weil beide Umformanordnungen zusammen weniger Raum einnahmen als zwei unabhängige, doch sind die Bearbeitungsvorrichtungen abhängig voneinander. Sollte eine Wartung bei einer Vorrichtung erfolgen, müssen beide Umformeinrichtungen außer Betrieb genommen werden, was kapazitiv die Standzeit verdoppelt.

Aufgabe der vorliegenden Erfindung ist es daher, eine Vorrichtung und ein Verfahren zum Drückwalzen von Werkstücken aufzuzeigen, welche gegenüber dem Stand der Technik mit geringeren Investitionskosten verbunden sind.

Die Aufgabe wird gelöst durch eine Vorrichtung und ein Verfahren mit den Merkmalen der unabhängigen Ansprüche. Die Merkmale der abhängigen Ansprüche betreffen vorteilhafte Ausführungsformen.

Erfindungsgemäß weist die Vorrichtung einen Antrieb zum Antreiben eines äußeren Umformwerkzeugs auf. Das äußere Umformwerkzeug, welches vorzugsweise als Umformrolle ausgebildet ist, kann so gemäß dem erfindungsgemäßen Verfahren das Werkstück in Rotation um die Werkstückachse versetzen.

Durch ein derartiges angetriebenes Umformwerkzeug kann der herkömmliche, direkt auf das Werkstück wirkende Rotationsantrieb einer herkömmlichen Vorrichtung der in Rede stehenden Art entlastet oder ersetzt werden. Dabei hat sich überraschender Weise gezeigt, dass bei einem erfindungsgemäßen Antrieb der Werkstückrotation über das äußere Umformwerkzeug eine signifikant geringere Antriebsleistung zur Erzielung des gleichen Umformeffekts erforderlich ist wie bei Vorrichtungen, bei denen der Antrieb der Werkstückrotation nach dem beschriebenen Stand der Technik erfolgt. Eine mögliche Erklärung für die signifikant geringere benötigte Antriebsleistung ist es, dass bei dem erfindungsgemäßen Antrieb der Werkstückrotation über die äußeren Umformwerkzeuge insgesamt geringere Reibungsverluste auftreten. Entsprechend reicht es auch aus, die Geschwindigkeit bzw. die Drehzahl der äußeren Umformwerkzeuge so einzustellen, dass die Umfangsgeschwindigkeit der äußeren Umformwerkzeuge im Kontaktbereich mit dem Werkstück nur minimal größer ist als die Umfangsgeschwindigkeit an der Oberfläche des Werkstücks.

Die erfindungsgemäße Vorrichtung weist weiterhin ein rotierbar angetriebenes zweites äußeres Umformwerkzeug und ein zweites inneres Umformwerkzeug auf, wobei die Vorrichtung eine erste Werkstückaufnahmeeinrichtung und eine zweite Werkstückaufnahmeeinrichtung aufweist.

Dabei ist es möglich, dass neben dem angetriebenen äußeren Umformwerkzeug weitere äußere Umformwerkzeuge in der gleichen, zur Werkstückachse senkrechten Ebene an der Außenkontur des Werkstücks angreifen. Dabei kann es sich bei den weiteren äußeren Umformwerkzeugen ebenfalls um angetriebene aber auch um nicht angetriebene herkömmliche äußere Umformwerkzeuge handeln. Die äußeren Umformwerkzeuge werden dabei bevorzugt gleichmäßig über den Umfang des Werkstücks verteilt angeordnet, so dass sich die in radialer Richtung auf das Werkstück wirkenden Kräfte, die durch die einzelnen äußeren Umformwerkzeuge aufgebracht werden, vorzugsweise gegenseitig neutralisieren. Auf diese Weise kann sich das Werkstück am inneren Umformwerkzeug abstützen, ohne dass dieses in radialer Richtung wirkende Kräfte aufnehmen muss.

Eine weitere vorteilhafte Weiterbildung, die mit einer noch effizienteren Nutzung der zur Verfügung gestellten Antriebskapazität einhergeht, besteht darin, dass das zweite äußere Umformwerkzeug durch einen gemeinsamen Antrieb mit dem ersten Umformwerkzeug angetrieben ist. Hierdurch werden konstruktive Abwandlungen der erfindungsgemäßen Vorrichtung ermöglicht, die darauf abzielen, die von dem Antrieb bereit gestellte Antriebsleistung an einer Mehrzahl angetriebener Umformwerkzeuge abrufen zu können.

Dies ermöglicht in vorteilhafter Weise den Wechselbetrieb bei der Herstellung von Werkstücken in verschiedenen Werkstückaufnahmeeinrichtungen einer erfindungsgemäßen Vorrichtung. Dabei setzt sich eine Werkstückaufnahmeeinrichtung vorzugsweise aus einem Werkstücklager und einem Werkstückwiderlager zusammen, zwischen denen das Werkstück axial entlang der Werkstückachse verspannt. Ist nun eine Mehrzahl, vorzugsweise zwei solcher Werkstückaufnahmeeinrichtungen, einer gemeinsamen Antriebseinheit zugeordnet, so ist es möglich, dass in einer Werkstückaufnahmeeinheit die Umformung eines Werkstücks stattfindet, während eine andere Werkstückaufnahmeeinheit mit einem umzuformenden Werkstück bestückt wird oder ein umgeformtes Werkstück aus dieser Werkstückaufnahmeeinheit entnommen wird. Auf diese Weise können die Totzeiten, die bei der Beschickung einer Werkstückaufnahmeeinrichtung für den dieser Werkstückaufnahmeeinrichtung zugeordneten Antrieb zwangsläufig entstehen, genutzt werden, um in einer anderen Werkstückaufnahmeeinrichtung ein Werkstück umzuformen. Hieraus ergibt sich letztendlich eine Vorrichtung, welche die doppelte oder mehrfache Fertigungskapazität ermöglicht und dabei lediglich eine Antriebseinrichtung für das äußere Umformwerkzeug bzw. die äußeren Umformwerkzeuge benötigt.

Ebenso ist es in vorteilhafter Weise denkbar, eine Mehrzahl äußerer Umformwerkzeuge entlang der Werkstückachse anzuordnen. Bei einer derartigen Konfiguration kann eine Mehrzahl Umformschritte nach dem erfindungsgemäßen Verfahren am gleichen Werkstück in einem einzigen Durchlauf einer erfindungsgemäßen Vorrichtung durchgeführt werden. Dies ist insbesondere dann vorteilhaft, wenn hohe Umformgrade erreicht werden sollen. Da sich hierbei mit jedem Umformschritt der äußere und/oder der innere Werkstückdurchmesser ändert, kann in besonders vorteilhafter Weise eine Anpassung der Antriebsparameter, insbesondere der Umfangsgeschwindigkeit des jeweiligen äußeren Umformwerkzeugs, an die Gegebenheiten der jeweiligen Umformzone erfolgen. Auf diese Weise können die Schlupf- und Reibungsverluste, die sich in den einzelnen, entlang der Werkstückachse hintereinander angeordneten Umformeinheiten ergeben, gezielt minimiert werden, wenn die Umformeinheiten gleichzeitig vom selben Werkstück durchlaufen werden.

Die Erfindung wird im Folgenden anhand der Figuren 1 bis 9 schematisch näher erläutert.
- Figur 1: - zeigt eine schematische Darstellung einer Vorrichtung zum Stand der Technik,
- Figur 2: - zeigt eine schematische Darstellung einer beispielhaften erfindungsgemäßen Vorrichtung mit zwei Werkstückaufnahmeeinrichtungen, die entlang einer gemeinsamen Werkstückachse angeordnet sind,
- Figur 3: - zeigt ein beispielhaftes Werkstück in Form eines Kupplungsgehäuses vor und nach der Umformung,
- Figur 4: - zeigt eine weitere beispielhafte Vorrichtung, die für die Fertigung langer Werkstücke ausgelegt ist,
- Figuren 5 und 6: - zeigen vergrößerte Darstellungen der in Figur 4 dargestellten beispielhaften Vorrichtung,
- Figur 7: - zeigt eine beispielhafte erfindungsgemäße Vorrichtung, welche die gleichzeitige Fertigung langer Werkstücke in zwei Werkstückaufnahmeeinrichtungen bei der Nutzung eines gemeinsamen Antriebs ermöglicht,
- Figur 8: - zeigt die in Figur 7 dargestellte Vorrichtung aus einer anderen Perspektive,
- Figur 9: - zeigt eine abgewandelte Form der in den Figuren 7 und 8 gezeigten Vorrichtung, bei der die Werkstückaufnahmeeinrichtungen derart angeordnet sind, dass in beiden Werkstückaufnahmeeinrichtungen eine Bearbeitung mit der gleichen Vorschubrichtung erfolgen kann.

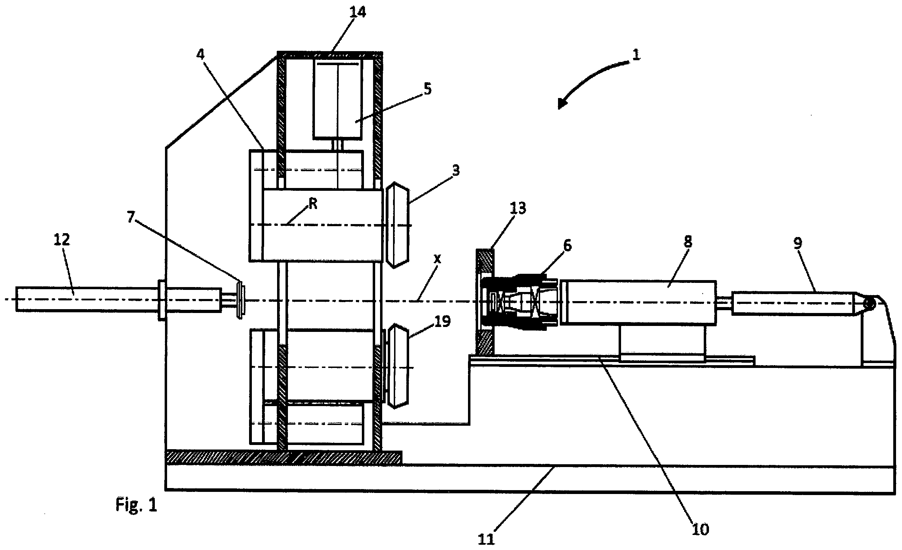

Die in Figur 1 dargestellte beispielhafte Vorrichtung 1 weist ein an einer Außenkontur eines Werkstücks 2 angreifendes äußeres Umformwerkzeug 3 auf. Das äußere Umformwerkzeug 3 ist im gezeigten Beispiel als Umform-rolle ausgestaltet. Die beispielhafte Vorrichtung 1 weist einen Antrieb 4 zum Antreiben des äußeren Umformwerkzeugs 3 auf. Eine Zustelleinrichtung 5, die beispielsweise als insbesondere hydraulischer Zylinder ausgeführt sein kann, ermöglicht die Zustellung des äußeren Umformwerkzeugs 3 in radialer Richtung. Die Zustellung in radialer Richtung dient dabei insbesondere dazu, den Außendurchmesser des Werkstücks 2, der sich in der Umformzone ergibt, vorzugeben.

Das innere Umformwerkzeug 6 ist im Fall der in Figur 1 gezeigten Vorrichtung als Dorn ausgebildet. In dieser beispielhaften Ausgestaltung übernimmt das als Dorn ausgebildete innere Umformwerkzeug 6 auch die Funktion des Werkstücklagers und bildet gemeinsam mit dem Werkstückwiderlager 7 eine beispielhafte Werkstückaufnahmeeinrichtung. Das innere Umformwerkzeug 6 ist an einer Aufnahme 8 für das innere Umformwerkzeug aufgenommen. Dabei ist das innere Umformwerkzeug 6 vorzugsweise drehbar relativ zur Aufnahme 8 gelagert, damit das innere Umformwerkzeug 6 den Bewegungen des fließenden Werkstoffs und/oder des rotierenden Werkstücks in Umfangsrichtung folgen kann. Die Aufnahme 8 und damit das innere Umformwerkzeug 6 sind vorzugsweise entlang der Werkstückachse X verschieblich gelagert. Hierfür ist vorzugsweise eine Linearführung 10 vorgesehen, die die Aufnahme 8 mit dem Maschinenrahmen 11 verbindet. Eine Vorschubeinrichtung 9, die beispielsweise als Vorschubzylinder ausgebildet sein kann, sorgt im gezeigten Beispiel in vorteilhafter Weise für die Durchführung der Vorschubbewegung. Dabei wirkt die Vorschubeinrichtung 9 vorzugsweise mit einer Gegendruckeinrichtung 12 zusammen, welche dazu dient, über das Werkstückwiderlager 7 eine Gegenkraft entlang der Werkstückachse X auf das Werkstück auszuüben, so dass sich eine axiale Verspannung des Werkstücks zwischen dem Werkstückwiderlager 7 und dem als Werkstücklager wirkenden inneren Umformwerkzeug 6 ergibt.

Das innere Umformwerkzeug 6 weist im gezeigten Beispiel in vorteilhafter Weise eine profilierte Oberfläche auf. Bei der Umformung fließt der plastifizierte Werkstoff in die Profilierung der Oberfläche des inneren Umformwerkzeugs. Auf diese Weise lassen sich Profilierungen an der Innenkontur des umgeformten Werkstücks erzeugen. Um nach erfolgter Umformung das Werkstück 2 wieder von dem inneren Umformwerkzeug 6 entfernen zu können, weist die beispielhafte Vorrichtung 1 in vorteilhafter Weise eine Werkstückentfernungseinrichtung 13 zur Entfernung des Werkstücks 2 von dem inneren Umformwerkzeug 6 auf. Die Werkstückentfernungseinrichtung 13 kann - wie im Beispiel gezeigt - als Abstreifeinrichtung ausgeführt sein. Im gezeigten Beispiel funktioniert diese derart, dass die Werkstückentfernungseinrichtung entlang der Werkstückachse X relativ zum inneren Umformwerkzeug 6 bewegt wird, so dass ein auf dem inneren Umformwerkzeug 6 aufgenommenes Werkstück 2 von der Werkstückentfernungseinrichtung 13 erfasst und von dem inneren Umformwerkzeug 6 abgestreift wird.

Alternativ zu dem gezeigten Beispiel ist es möglich, eine Vorrichtung 1 mit einem inneren Umformwerkzeug 6, wie es beispielsweise aus EP 2 343 138 bekannt ist, auszustatten. Ein derartiges inneres Umformwerkzeug 6 zeichnet sich dadurch aus, dass die Position der Umformzone auf dem inneren Umformwerkzeug und damit der sich ergebende innere Werkstückdurchmesser, durch die relative Position von innerem Umformwerkzeug 6 und äußerem Umformwerkzeug 3 entlang der Werkstückachse X vorgegeben werden kann. Damit dies möglich ist, muss das Werkstück 2 relativ zum inneren Umformwerkzeug 6 entlang der Werkstückachse X verschieblich sein, d.h. in diesem Fall wird das innere Umformwerkzeug 6 regelmäßig nicht auch die Funktion des Werkstücklagers übernehmen können.

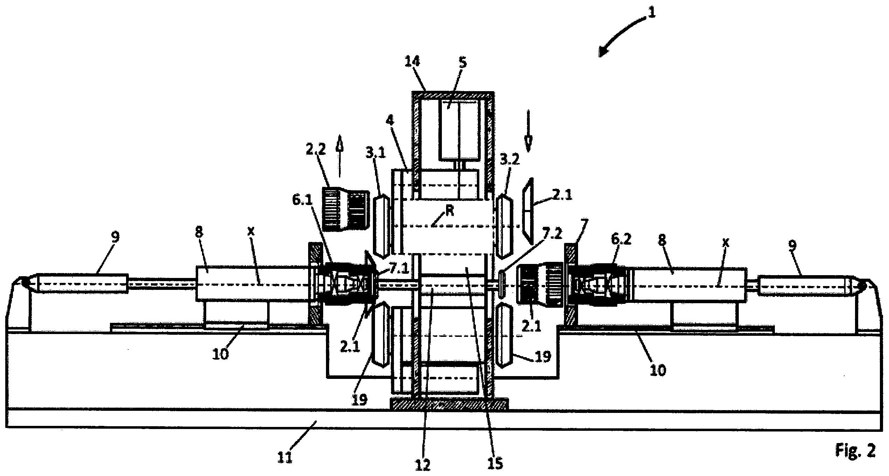

Dabei ist es grundsätzlich möglich, bei jedem der im Zusammenhang mit der vorliegenden Erfindung beschriebenen Ausführungsbeispiele abhängig von der Art des zu fertigenden Bauteils ein inneres Umformwerkzeug 6, wie es in der Figur 1 dargestellt ist, oder ein auf andere Weise gestaltetes inneres Umformwerkzeug 6, insbesondere ein inneres Umformwerkzeug 6 im Sinne der EP 2 343 138, vorzusehen. Der mit dem jeweiligen Ausführungsbeispiel dargestellte Typ des inneren Umformwerkzeugs 6 ist lediglich exemplarisch. Dementsprechend ist das in Figur 2 dargestellte erfindungsgemäße Ausführungsbeispiel beispielhaft mit zwei inneren Umformwerkzeugen 6.1 und 6.2 ausgestattet, welche dem in Figur 1 dargestellten inneren Umformwerkzeug entsprechen.

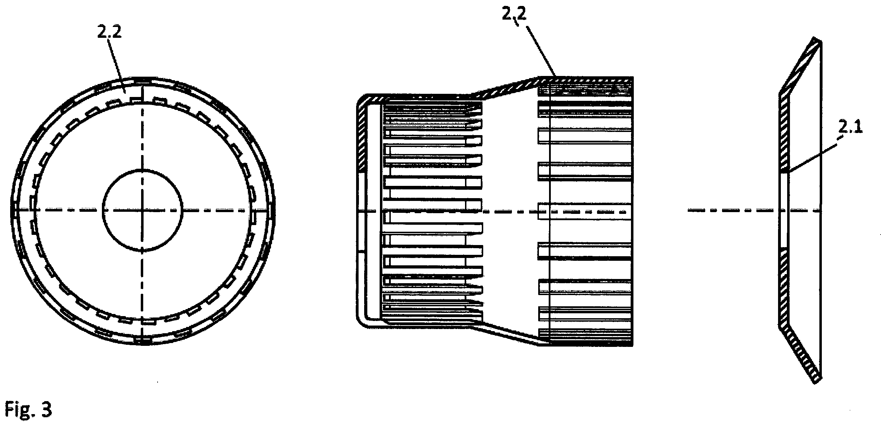

In Figur 3 ist beispielhaft ein Werkstück 2.1 vor der Umformung und ein Werkstück 2.2 nach der Umformung dargestellt. Die Ansicht entlang der Achse und die Schnittdarstellung des umgeformten Werkstücks 2.2 verdeutlichen, dass es möglich ist, Werkstücke 2.2 mit profilierten Innenkonturen zu fertigen, insbesondere dann, wenn das innere Umformwerkzeug 6.1 oder 6.2 eine entsprechende Profilierung seiner Außenkontur aufweist.

Die in Figur 2 dargestellte beispielhafte erfindungsgemäße Vorrichtung 1 unterscheidet sich von der in Figur 1 dargestellten, dem Stand der Technik entsprechenden Vorrichtung 1 insbesondere dadurch, dass die Vorrichtung 1 eine erste Werkstückaufnahmeeinrichtung und eine zweite Werkstückaufnahmeeinrichtung aufweist. Dabei sind beide Werkstückaufnahmeeinrichtungen vorzugsweise auf der gleichen gemeinsamen Werkstückachse X angeordnet. Die erste Werkstückaufnahmeeinrichtung wird im gezeigten Beispiel vorzugsweise durch ein als erstes Werkstücklager wirkendes erstes inneres Umformwerkzeug 6.1 gebildet, welches zum axialen Verspannen eines Werkstücks 2 bevorzugt mit einem ersten Werkstückwiderlager 7.1 zusammenwirkt. Entsprechend bildet vorzugsweise ein zweites inneres Umformwerkzeug 6.2 in seiner Funktion als zweites Werkstücklager, welches weiter vorzugsweise mit dem zweiten Werkstückwiderlager 7.2 zusammenwirkt, eine zweite Werkstückaufnahmeeinrichtung.

Durch die zwei Werkstückaufnahmeeinrichtungen ist es in vorteilhafter Weise möglich, Werkstücke im Wechselbetrieb zwischen den einzelnen Werkstückaufnahmeeinrichtungen zu fertigen. Dabei wird jeweils die eine Werkstückaufnahmeeinrichtung mit einem neuen Werkstück 2.1 bestückt oder es wird ein fertig umgeformtes Werkstück 2.2 entnommen, während in der anderen Werkstückaufnahmeeinrichtung ein Werkstück 2 umgeformt wird.

Entsprechend weist die dargestellte beispielhafte Vorrichtung 1 ein erstes äußeres Umformwerkzeug 3.1 und ein zweites äußeres Umformwerkzeug 3.2 auf, die durch einen gemeinsamen Antrieb 4 angetrieben werden. Vorzugsweise sind dabei das erste äußere Umformwerkzeug 3.1 und das zweite äußere Umformwerkzeug 3.2 auf einer gemeinsamen Welle angeordnet.

Jeweils eines der äußeren Umformwerkzeuge 3.1 und 3.2 ist auf einer der beiden Werkstückaufnahmeeinrichtungen zugewandten Seite der Umformeinheit 14 angeordnet. Im Zentrum der Umformeinheit 14 ist so ein Raumbereich gebildet, in den das erste Widerlager 7.1 oder das zweite Widerlager 7.2 durch die Vorschubbewegung eines Werkstücks 2 zurück gedrängt werden kann. Der Raumbereich 15 wird so von beiden Werkstückwiderlagern 7.1 und 7.2, vorzugsweise zumindest derart von beiden Werkstückaufnahmeeinrichtungen, gemeinsam genutzt, dass eine Gegendruckeinrichtung 12, die auf beide Werkstückwiderlager 7.1 und 7.2 wirkt, in dem Raumbereich 15 angeordnet ist.

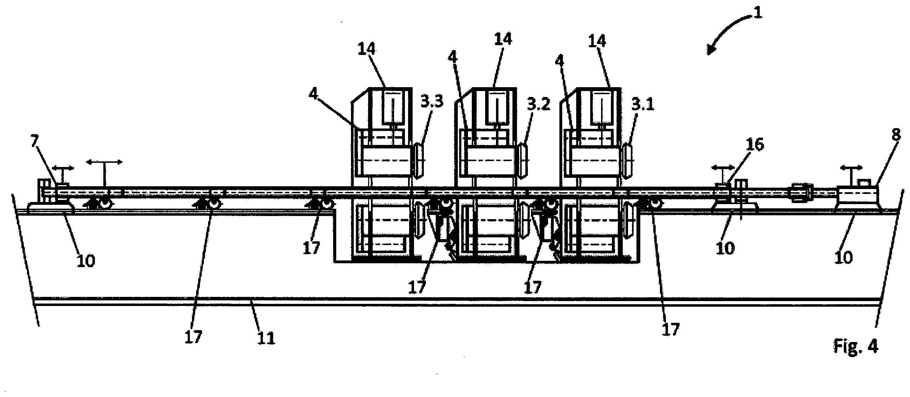

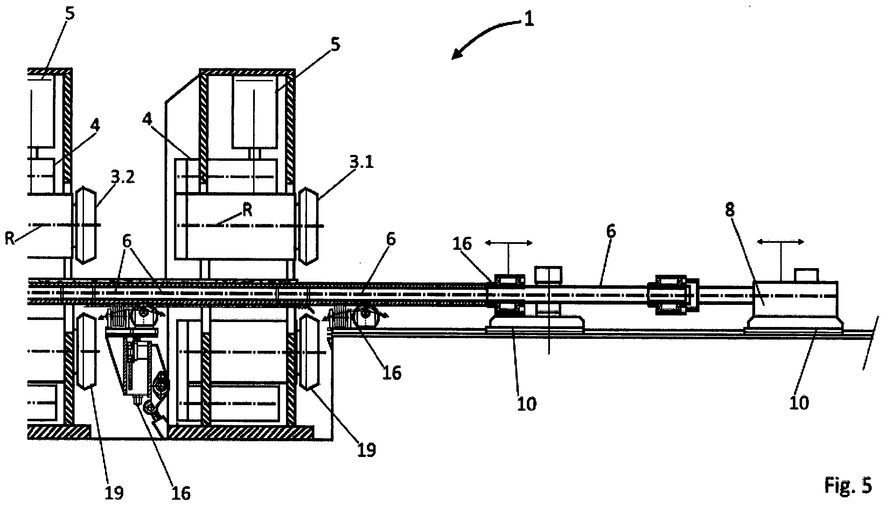

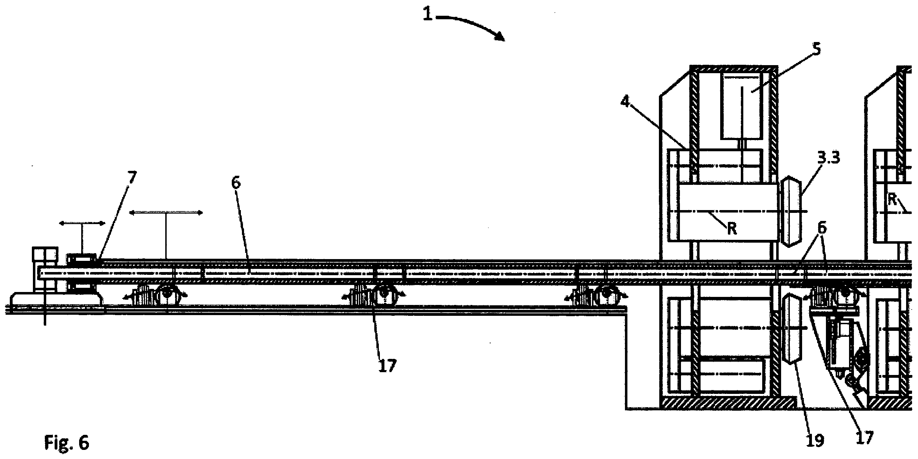

In den Figuren 4, 5 und 6 ist eine weitere beispielhafte Vorrichtung dargestellt, die sich insbesondere zur Fertigung langer Werkstücke, wie beispielsweise Masten für Beleuchtungseinrichtungen oder ähnliches, eignet. Diese vorteilhafte Ausführungsform zeichnet sich insbesondere dadurch aus, dass entlang der Werkstückachse X eine Mehrzahl - im dargestellten Beispiel drei - Umformeinheiten 14 hintereinander angeordnet ist. Die einzelnen Umformeinheiten 14 entsprechen dabei im gezeigten Beispiel in ihrem Aufbau vorzugsweise jeweils der in Figur 1 dargestellten beispielhaften Umformeinheit 14. Wesentlicher Unterscheid zwischen der in Figur 4 und der in Figur 1 dargestellten Vorrichtung 1 ist die Gestaltung der Lagerung des Werkstücks 2 und des inneren Umformwerkzeugs 6. Das Werkstück 2 ist zwischen einem Werkstücklager 16 und einem Werkstückwiderlager 7 axial entlang der Werkstückachse X verspannt. Das innere Umformwerkzeug 6 ist im gezeigten Beispiel vorzugsweise um die Werkstückachse X drehbar an einer Aufnahme 8 für das innere Umformwerkzeug aufgenommen. Die Aufnahme 8, das Werkstücklager 16 und/oder das Werkstückwiderlager 7 sind entlang der Werkstückachse X verschieblich ausgebildet, insbesondere durch eine Linearführung 10 am Maschinenrahmen 11 aufgenommen.

Während der Umformung mit der in Figur 4 dargestellten Vorrichtung 1 greift zunächst ein erstes äußeres Umformwerkzeug 3.1 an der Außenkontur des Werkstücks 2 an. Mit fortschreitender Vorschubbewegung gelangt der durch das erste äußere Umformwerkzeug 3.1 bereits umgeformte Bereich des Werkstücks 2 in den Wirkbereich des zweiten äußeren Umformwerkzeugs 3.2, welches einen weiteren Umformschritt an dem Werkstück 2 durchführt. Im gezeigten Beispiel durchläuft das Werkstück noch ein drittes äußeres Umformwerkzeug 3.3. Grundsätzlich ist es jedoch möglich, eine beliebige Anzahl äußerer Umformwerkzeuge nacheinander in der beschriebenen Art und Weise an dem Werkstück 2 angreifen zu lassen.

Um die Lagerung derartig langer Werkstücke zu verbessern, können Unterstützungseinrichtungen 17 vorgesehen sein. Bei diesen kann es sich beispielsweise um Supportrollen handeln. Die Unterstützungseinrichtungen 17 sind bevorzugt so ausgebildet, dass sie eine Abstützung des Gewichts des Werkstücks 2 ermöglichen, dabei gleichzeitig jedoch eine Bewegung des Werkstücks 2 zulassen. So kann es sich um Supportrollen handeln, die so orientiert sind, dass sie ein axiales Verschieben und/oder ein Rotieren um die Werkstückachse X ermöglichen. Besonders bevorzugt sind die Supportrollen schwenkbar, so dass sie axiales Verschieben und Rotieren des Werkstücks 2 wahlweise ermöglichen bzw. Überlagerungen von axialem Vorschub und Rotation durch eine entsprechende Winkelstellung zulassen können.

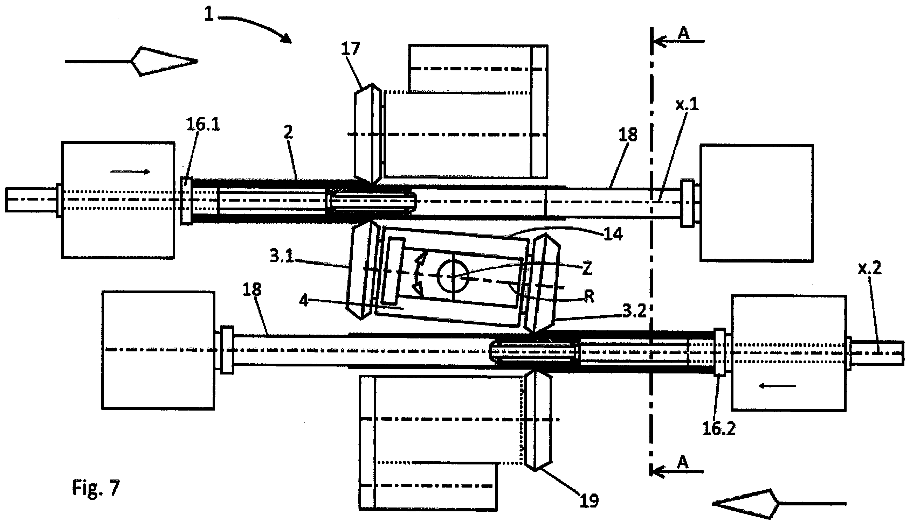

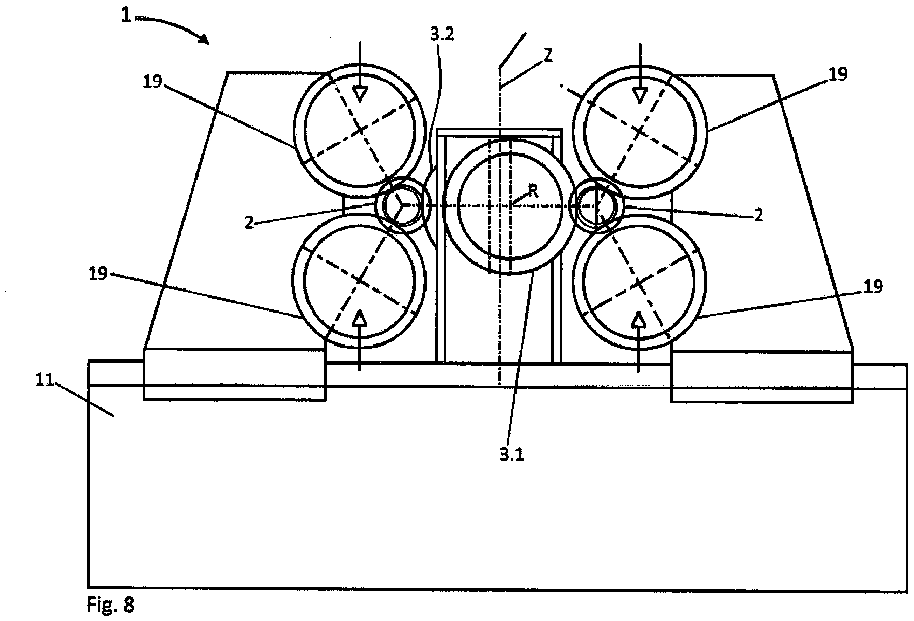

In den Figuren 7 und 8 ist eine weitere vorteilhafte Ausführungsform der vorliegenden Erfindung dargestellt. Diese Vorrichtung 1 verfügt ebenfalls über ein erstes äußeres Umformwerkzeug 3.1 und ein zweites äußeres Umformwerkzeug 3.2, die durch einen gemeinsamen Antrieb 4 angetrieben sind. Die Werkstückaufnahmeeinrichtungen sind an den voneinander abgewandten Seiten des gemeinsamen Antriebs 4 der äußeren Umformwerkzeuge 3.1 und 3.2 angeordnet. Die äußeren Umformwerkzeuge 3.1 und 3.2 sind vorzugsweise ebenfalls auf einer gemeinsamen Welle angeordnet.

Die beispielhaft dargestellten Werkstückaufnahmeeinrichtungen weisen vorzugsweise jeweils ein Werkstücklager 16.1 bzw. 16.2 auf. An der von dem Werkstücklager 16.1 bzw. 16.2 abgewandten Seite sind die Werkstücke 2 im gezeigten Beispiel lediglich durch einen Zentrierdorn 18 zentriert, können sich jedoch in axialer Richtung auf diesen aufschieben. Diese Art der Werkstücklagerung lässt sich selbstverständlich auch im Zusammenhang mit den vorstehend beschriebenen anderen Ausführungsbeispielen realisieren. Ebenso ist es möglich, die in den Figuren 7 und 8 gezeigte Vorrichtung mit einem Werkstückwiderlager im Sinne der vorstehenden Ausführungsbeispiele auszustatten.

Die erfindungsgemäße Vorrichtung 1 weist nun den Vorteil auf, dass mit einer Antriebseinheit 4 Werkstücke in beiden Werkstückaufnahmeeinrichtungen bearbeitet werden können.

Dabei ist in vorteilhafter Weise eine Zustellung der äußeren Umformwerkzeuge 3.1 und 3.2 möglich, indem die gemeinsame Achse der äußeren Umformwerkzeuge 3.1 und 3.2 um eine Zustellachse Z verschwenkt wird. Vorzugsweise ist dabei die gesamte Umformeinheit 14 mit dem Antrieb und den mit diesem über eine, vorzugsweise gemeinsame, Welle verbundenen Umformwerkzeugen 3.1 und 3.2 verschwenkbar gelagert. Die Zustellachse Z verläuft vorzugsweise senkrecht zu der durch die Werkstückachsen X.1 und X.2 definierten Ebene. Die gemeinsame Rotationsachse R der Umformwerkzeuge 3.1 und 3.2 verläuft so während der Umformung in einem spitzen Winkel zur ersten Werkstückachse X.1 und/oder zur zweiten Werkstückachse X.2.

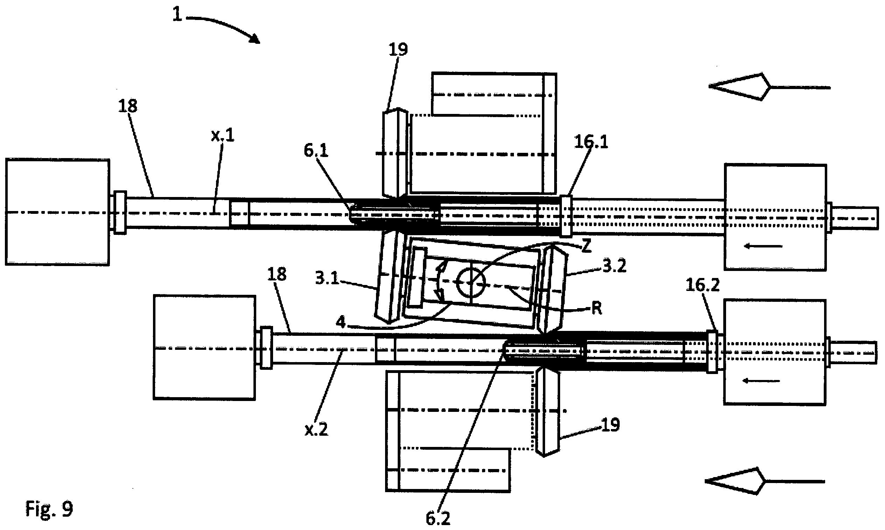

In Figur 9 ist eine Abwandlung der in den Figuren 7 und 8 dargestellten Vorrichtung 1 gezeigt, die sich lediglich darin unterscheidet, dass die Vorschubrichtung der Werkstücke 2 entlang der ersten und zweiten Werkstückachse X.1 und X.2 in die gleiche Richtung gerichtet sind. Bei der in den Figuren 7 und 8 dargestellten Ausführungsform sind die Vorschubrichtungen dagegen gegenläufig.

Bei sämtlichen dargestellten Ausführungsbeispielen ist es möglich, dass weitere Umformwerkzeuge 19 vorhanden sind, die in der gleichen zur Werkstückachse X senkrechten Ebene an dem Werkstück 2 angreifen, wie ein erfindungsgemäß angetriebenes Umformwerkzeug 3. Die weiteren Umformwerkzeuge 19 können dabei ebenfalls angetrieben sein. Es kann sich auch um antriebslose Umformwerkzeuge 19 handeln. Diese sind bevorzugt so über den Umfang verteilt angeordnet, dass sich die radial ausgeübten Kräfte der einzelnen Umformwerkzeuge aufheben. Auf diese Weise kann sich die Innenkontur des Werkstücks 2 während der Umformung am inneren Umformwerkzeug 6 aufstützen, ohne dass dieses mit Biegemomenten belastet wird.

### Bezugszeichenliste:

- 1: Vorrichtung
- 2: Werkstückachse
- 2.1: Werkstück vor Umformung
- 2.2: Werkstück nach Umformung
- 3: äußeres Umformwerkzeug
- 3.1: erstes äußeres Umformwerkzeug
- 3.2: zweites äußeres Umformwerkzeug
- 4: Antrieb
- 5: Zustelleinrichtung
- 6: inneres Umformwerkzeug
- 6.1: erstes inneres Umformwerkzeug
- 6.2: zweites inneres Umformwerkzeug
- 7: Werkstückwiderlager
- 7.1: erstes Werkstückwiderlager
- 7.2: zweites Werkstückwiderlager
- 8: Aufnahme für das innere Umformwerkzeug
- 9: Vorschubeinrichtung
- 10: Linearführung
- 11: Maschinenrahmen
- 12: Gegendruckeinrichtung
- 13: Werkstückentfernungseinrichtung
- 14: Umformeinheit
- 15: Raumbereich
- 16: Werkstücklager
- 16.1: erstes Werkstücklager
- 16.2: zweites Werkstücklager
- 17: Unterstützungseinrichtung
- 18: Zentrierdorn
- 19: weiteres Umformwerkzeug
- X: Werkstückachse
- X.1: erste Werkstückachse
- X.2: zweite Werkstückachse
- Z: Zustellachse
- R: Rotationsachse

## Patentansprüche

1. Vorrichtung (1) zum Drückwalzen von Werkstücken (2, 2.1, 2.2), mit einem rotierbaren ersten äußeren Umformwerkzeug (3, 3.1) zum Angriff an einer Außenkontur eines ersten hohlkörperförmigen Werkstücks (2) und einem ersten inneren Umformwerkzeug (6, 6.1) zum Angriff an einer Innenkontur des Werkstücks (2), wobei das erste Werkstück (2) um eine erste Werkstückachse (X, X.1) in Rotation versetzbar und durch einen in einer zwischen den ersten Umformwerkzeugen (3, 3.1, 6, 6.1) gebildeten Umformzone durch einen von dem ersten inneren Umformwerkzeug (6, 6.1) und dem ersten äußeren Umformwerkzeug (3, 3.1) aufgebrachten Druck plastisch verformbar ist, indem der Werkstoff zwischen den ersten Umformwerkzeugen (3, 3.1, 6, 6.1) zum Fließen gebracht wird, wobei die Vorrichtung (1) einen Antrieb (4) aufweist, der das erste äußere Umformwerkzeug (3, 3.1) antreibt,
**dadurch gekennzeichnet,**
**dass** die Vorrichtung (1) ein rotierbar angetriebenes zweites äußeres Umformwerkzeug (3.2) und ein zweites inneres Umformwerkzeug (6.2) aufweist, wobei die Vorrichtung (1) eine erste Werkstückaufnahmeeinrichtung, die zur Aufnahme eines ersten Werkstücks (2) ausgebildet ist, und eine zweite Werkstückaufnahmeeinrichtung aufweist, die zur Aufnahme eines zweiten Werkstücks (2) ausgebildet ist, wobei die Werkstückaufnahmeeinrichtungen so ausgebildet sind, dass in einer die Umformung eines Werkstücks (2) stattfinden, während die andere mit einem Werkstück (2) bestückt oder ein umgeformtes Werkstück daraus entnommen werden kann.

2. Vorrichtung (1) nach Anspruch 1,
**dadurch gekennzeichnet,**
**dass** das rotierbar angetriebene zweite äußere Umformwerkzeug (3.2) mit dem ersten äußeren Umformwerkzeug (3, 3.1) auf einer gemeinsamen Rotationsachse (R) angeordnet ist, insbesondere wobei der Antrieb (4) ein gemeinsamer Antrieb (4) zum Antreiben des ersten äußeren Umformwerkzeugs (3, 3.1) und das zweiten äußeren Umformwerkzeugs (3.2) ist.

3. Vorrichtung (1) nach Anspruch 1 oder 2,
**dadurch gekennzeichnet,**
**dass** die erste Werkstückaufnahmeeinrichtung derart gestaltet ist, dass das erste Werkstück (2) zwischen einem ersten Werkstücklager (16, 16.1) und einem ersten Werkstückwiderlager (7, 7.1) in Richtung der ersten Werkstückachse (X, X.1) axial verspannbar ist, wobei das erste Werkstücklager (16, 16.1) und das erste Werkstückwiderlager (7, 7.1) relativ zu dem ersten äußeren Umformwerkzeug (3, 3.1) entlang der ersten Werkstückachse (X, X.1) axial verschieblich sind.

4. Vorrichtung (1) nach einem der vorigen Ansprüche,
**dadurch gekennzeichnet,**
**dass** die zweite Werkstückaufnahmeeinrichtung derart gestaltet ist, dass ein zweites Werkstück (2) zwischen einem zweiten Werkstücklager (16.2) und einem zweiten Werkstückwiderlager (7.2) in Richtung der zweiten Werkstückachse (X.2) axial verspannbar ist, wobei das zweite Werkstücklager (16.2) und das zweite Werkstückwiderlager (7.2) relativ zu dem zweiten äußeren Umformwerkzeug entlang der zweiten Werkstückachse (X, X.2) axial verschieblich sind.

5. Vorrichtung (1) nach einem der vorigen Ansprüche,
**dadurch gekennzeichnet,**
**dass** die erste Werkstückaufnahmeeinrichtung und die zweite Werkstückaufnahmeeinrichtung auf voneinander abgewandten Seiten des Antriebs (4) angeordnet sind.

6. Vorrichtung (1) nach einem der vorigen Ansprüche,
**dadurch gekennzeichnet,**
**dass** das erste äußere Umformwerkzeug (3.1) und das zweite äußere Umformwerkzeug (3.2) auf einer gemeinsamen Rotationsachse (R) angeordnet sind, wobei die Rotationsachse (R) in einem spitzen Winkel zur ersten und/oder zweiten Werkzeugachse (X, X.1, X.2) verläuft.

7. Vorrichtung (1) nach einem der vorigen Ansprüche,
**dadurch gekennzeichnet,**
**dass** die erste Werkstückaufnahmeeinrichtung und die zweite Werkstückaufnahmeeinrichtung derart gestaltet und angeordnet sind, dass beide Werkstückaufnahmeeinrichtungen einen gemeinsamen Raumbereich (15) zur Aufnahme wenigstens eines Teilbereichs des jeweiligen umgeformten Werkstücks (2) und/oder der jeweiligen Werkstückaufnahmeeinrichtung nutzen, insbesondere wobei die Werkstückwiderlager (7.1, 7.2) beider Werkstückaufnahmeeinrichtungen in den gemeinsamen Werkstückaufnahmebereich hinein verschieblich sind, vorzugsweise wobei die erste Werkstückaufnahmeeinrichtung und die zweite Werkstückaufnahmeeinrichtung eine gemeinsame Werkstückachse (X) aufweisen.

8. Vorrichtung (1) nach einem der vorigen Ansprüche,
**dadurch gekennzeichnet,**
**dass** die Vorrichtung weitere äußere Umformwerkzeuge (19) aufweist, die vorzugsweise in der gleichen zur Werkstückachse (X, X.1, X.2) senkrechten Ebene an der Außenkontur des jeweiligen Werkstücks (2) angreifen wie das erste äußere Umformwerkzeug (3, 3.1) und/oder das zweite äußere Umformwerkzeug (3.2).

9. Vorrichtung (1) nach einem der vorigen Ansprüche,
**dadurch gekennzeichnet,**
**dass** die Vorrichtung eine Mehrzahl entlang der ersten Werkstückachse (X, X.1) hintereinander angeordnete äußere Umformwerkzeuge (3.1, 3.2, 3.3) aufweist.

10. Vorrichtung (1) nach einem der vorigen Ansprüche,
**dadurch gekennzeichnet,**
**dass** das erste und/oder zweite äußere Umformwerkzeug (3, 3.1, 3.2) zur Zustellung um eine Zustellachse (Z) schwenkbar ist.

11. Verfahren zum Drückwalzen von Werkstücken (2) mit einer Vorrichtung (1) nach einem der vorigen Ansprüche,
wobei wenigstens ein erstes rotierendes äußeres Umformwerkzeug (3, 3.1), insbesondere eine Umformrolle, an einer Außenkontur eines hohlkörperförmigen ersten Werkstücks (2) angreift, wobei das erste äußere Umformwerkzeug (3, 3.1) mit einem im Inneren des Werkstücks (2) angeordneten ersten inneren Umformwerkzeug (6, 6.1) derart zusammenwirkt, dass sich zwischen dem ersten inneren Umformwerkzeug (6, 6.1) und dem ersten äußeren Umformwerkzeug (3, 3.1) eine Umformzone ausbildet, in der der Werkstoff des ersten Werkstücks (2) durch einen von den ersten Umformwerkzeugen (3, 3.1, 6, 6.1) ausgeübten Druck zum Fließen gebracht wird,
wobei das erste Werkstück (2) durch das erste äußere Umformwerkzeug (3, 3.1) in Rotation um eine erste Werkzeugachse (X, X.1) versetzt wird,
**dadurch gekennzeichnet,**
**dass** ein zweites rotierendes äußeres Umformwerkzeug (3.2), insbesondere eine Umformrolle, an einer Außenkontur eines zweiten hohlkörperförmigen Werkstücks (2) angreift, wobei das zweite äußere Umformwerkzeug mit einem im Inneren des zweiten Werkstücks (2) angeordneten zweiten Umformwerkzeug (6.2) derart zusammenwirkt, dass sich zwischen dem zweiten inneren Umformwerkzeug (6.2) und dem zweiten äußeren Umformwerkzeug (3.2) eine Umformzone ausbildet, in der der Werkstoff des zweiten Werkstücks (2) durch einen von den zweiten Umformwerkzeugen ausgeübten Druck zum Fließen gebracht wird, wobei das zweite Werkstück (2) durch das zweite äußere Umformwerkzeug (3.2) in Rotation um eine zweite Werkzeugachse (x, X.2) versetzt wird, wobei das erste und das zweite Werkstück (2) während der Umformung jeweils in einer dem ersten oder dem zweiten äußeren Umformwerkzeug (3.1, 3.2) zugeordneten ersten oder zweiten Werkstückaufnahmeeinrichtung aufgenommen sind und während der Umformung des Werkstücks in der einen Werkstückaufnahmeeinrichtung das Werkstück in der anderen Werkstückaufnahmeeinrichtung gewechselt wird.

12. Verfahren nach Anspruch 11,
**dadurch gekennzeichnet,**
**dass** das zweite rotierende, äußere Umformwerkzeug gemeinsam mit dem ersten äußeren Umformwerkzeug (3, 3.1) durch einen gemeinsamen Antrieb (4) angetrieben wird.

13. Verfahren nach Anspruch 11 oder 12,
**dadurch gekennzeichnet,**
**dass** das erste Werkstück (2) und das zweite Werkstück (2) bei der Umformung in entgegengesetzter Richtung entlang der ersten und/oder zweiten Werkstückachse (X, X.1, X.2) bewegt werden.

14. Verfahren nach einem der Ansprüche 11 bis 13,
**dadurch gekennzeichnet,**
**dass** durch die relative Position des ersten und/oder zweiten inneren Umformwerkzeugs (6, 6.1, 6.2) zu dem mit dem jeweiligen inneren Umformwerkzeug zusammenwirkenden äußeren Umformwerkzeug (3, 3.1, 3.2) entlang der jeweiligen inneren Umformwerkzeug (6, 6.1, 6.2) zugeordneten Werkstückachse (X, X.1, X.2) der Innendurchmesser des zu fertigenden Werkstücks (2) an der jeweiligen Position der Umformzone entlang der jeweiligen Werkstückachse (X, X.1, X.2) vorgegeben wird.

## Claims

1. Device (1) for pressure rolling workpieces (2, 2.1, 2.2), with a rotatable first outer forming tool (3, 3.1) for engaging on an outer contour of a first hollow-body shaped workpiece (2), and a first inner forming tool (6, 6.1) for engaging on an inner contour of the workpiece (2), wherein the first workpiece (2) can be set in rotation about a first workpiece axis (X, X.1) and can be plastically deformed by a pressure which is applied in a reshaping zone, formed between the first forming tools (3, 3.1, 6, 6.1), by the first inner forming tool (6, 6.1) and the first outer forming tool (3, 3.1), whereby the material is made to flow between the first forming tools (3, 3.1, 6, 6.1), wherein the device (1) has a drive (4) which drives the first outer forming tool (3, 3.1),
**characterised in that**
the device (1) has a rotationally driven second outer forming tool (3.2) and a second inner forming tool (6.2), wherein the device (1) has a first workpiece receiving device which is designed to receive a first workpiece (2), and a second workpiece receiving device which is designed to receive a second workpiece (2), wherein the workpiece receiving devices are designed so that the reforming of a workpiece (2) takes place in one whilst the other is fitted with a workpiece or from which a reformed workpiece can be removed.

2. Device (1) according to claim 1
**characterised in that**
the rotationally driven second outer forming tool (3.2) is arranged with the first outer forming tool (3, 3.1) on a common axis of rotation ®, in particular wherein the drive (4) is a common drive (4) for driving the first outer forming tool (3, 3.1) and the second outer forming tool (3.2).

3. Device (1) according to claim 1 or 2
**characterised in that**
the first workpiece receiving device is configured so that the first workpiece (2) can be axially tensioned between a first workpiece bearing (16, 16.1) and a first workpiece abutment (7, 7.1) in the direction of the first workpiece axis (X, X.1), wherein the first workpiece bearing (16, 16.1) and the first workpiece abutment (7, 7.1) are axially displaceable relative to the first outer forming tool (3, 3.1) along the first workpiece axis (X, X.1).

4. Device (1) according to one of the preceding claims
**characterised in that**
the second workpiece receiving device is configured so that a second workpiece (2) can be axially tensioned between a second workpiece bearing (16.2) and a second workpiece abutment (7.2) in the direction of the second workpiece axis (X.2), wherein the second workpiece bearing (16.2) and the second workpiece abutment (7.2) are axially displaceable relative to the second outer forming tool along the second workpiece axis (X, X.2).

5. Device (1) according to one of the preceding claims
**characterised in that**
the first workpiece receiving device and the second workpiece receiving device are arranged on sides of the drive (4) facing away from one another.

6. Device (1) according to one of the preceding claims
**characterised in that**
the first outer forming tool (3.1) and the second outer forming tool (3.2) are arranged on a common axis of rotation (R) wherein the axis of rotation (R) runs at an acute angle to the first and/or second tool axis (X, X.1, X.2).

7. Device (1) according to one of the preceding claims
**characterised in that**
the first workpiece receiving device and the second workpiece receiving device are configured and arranged so that both workpiece receiving devices use a common spatial region (15) to receive at least one partial region of the respective reformed workpiece (2) and/or of the respective workpiece receiving device, in particular wherein the workpiece abutments (7.1, 7.2) of the two workpiece receiving devices are displaceable into the common workpiece receiving region, preferably wherein the first workpiece receiving device and the second workpiece receiving device have a common workpiece axis (X).

8. Device (1) according to one of the preceding claims
**characterised in that**
the device has further outer forming tools (19) which preferably engage on the outer contour of the respective workpiece (2) in the same plane perpendicular to the workpiece axis (X, X.1, X.2) as the first outer forming tool (3, 3.1) and/or the second outer forming tool (3.2).

9. Device (1) according to one of the preceding claims,
**characterised in that**
the device has a plurality of outer forming tools (3.1, 3.2, 3.3) arranged in succession along the first workpiece axis (X, X.1).

10. Device (1) according to one of the preceding claims
**characterised in that**
the first and /or the second outer forming tool (3, 3.1, 3.2) is/are pivotable for delivery about an infeed axis (Z).

11. Method for pressure rolling workpieces (2), with a device (1) according to one of the preceding claims, wherein at least one first rotating outer forming tool (3, 3.1), in particular a forming roller, engages on an outer contour of a hollow-body shaped first workpiece (2) wherein the first outer forming tool (3, 3.1) interacts with a first inner forming tool (6, 6.1) arranged inside the workpiece (2) in such a way that between the first inner forming tool (6, 6.1) and the first outer forming tool (3, 3.1) a reshaping zone is formed in which the material of the first workpiece (2) is made to flow by pressure exerted by the first forming tools (3, 3.1, 6, 6.1), wherein the first workpiece (2) is set in rotation about a first tool axis (X, X.1) by the first outer forming tool (3, 3.1),
**characterised in that**
a second rotating outer forming tool (3.2), in particular a forming roller, engages on an outer contour of a second hollow-body shaped workpiece (2), wherein the second outer forming tool interacts with a second forming tool (6.2) arranged inside the second workpiece (2), in such a way that between the second inner forming tool (6.2) and the second outer forming tool (3.2) a reshaping zone is formed in which the material of the second workpiece (2) is made to flow by pressure exerted by the second forming tools, wherein the second workpiece (2) is set in rotation about a second tool axis (X, X.2) by the second outer forming tool (3.2), wherein the first and the second workpieces (2) are each received during forming in a first or second workpiece receiving device assigned to the first or the second outer forming tool (3.1, 3.2) and during the forming of the workpiece in the one workpiece receiving device the workpiece is changed in the other workpiece receiving device.

12. Method according to claim 11
**characterised in that**
the second rotating outer forming tool is driven together with the first outer forming tool (3, 3.1) by a common drive (4).

13. Method according to claim 11 or 12
**characterised in that**,
during forming, the first workpiece (2) and the second workpiece (2) are moved in opposite direction along the first and/or second workpiece axis (X, X.1, X.2).

14. Method according to one of claims 11 to 13
**characterised in that**
the inner diameter of the workpiece (2) to be finished is predetermined at the respective position of the reshaping zone along the respective workpiece axis (X, X.1, X2) by the relative position of the first and/or second inner forming tools (6, 6.1, 6.2) to the outer forming tool (3, 3.1, 3.2), interacting with the respective inner forming tool, along the tool axis (X, X.1, X.2) assigned to the respective inner forming tool (6, 6.1, 6.2).

## Revendications

1. Dispositif (1) pour le fluotournage des pièces à usiner (2, 2.1, 2.2) avec un premier outil de formage externe rotatif (3, 3.1) pour l'application à un contour extérieur d'une première pièce à usiner de forme creuse (2), et un premier outil de formage interne (6, 6.1) pour l'application à un contour interne de la pièce à usiner (2), dans lequel la première pièce à usiner (2) peut être mise en rotation autour d'un premier axe de la pièce à usiner (X, X.1), et est plastiquement déformable dans une zone de formage formée entre les premiers outils de formage (3, 3.1, 6, 6.1) par l'intermédiaire d'une pression appliquée par le premier outil de formage interne (6, 6.1) et le premier outil de formage externe (3, 3.1), en faisant couler la matière entre les premiers outils de formage (3, 3.1, 6, 6.1), dans lequel le dispositif (1) comporte un entraînement (4), qui entraîne le premier outil de formage externe (3, 3.1),
**caractérisé en ce**
**que** le dispositif (1) comporte un second outil de formage externe (3.2) entraîné de manière rotative, et un second outil de formage interne (6.2), dans lequel le dispositif (1) comporte un premier dispositif porte-pièce, qui est configuré pour la réception d'une première pièce à usiner (2), et un second dispositif porte-pièce, qui est configuré pour la réception d'une seconde pièce à usiner (2), dans lequel les dispositifs porte-pièces sont configurés de sorte que dans un des dispositifs le formage de la pièce à usiner (2) peut être réalisé, tandis que l'autre peut être équipé d'une pièce à usiner (2) ou une pièce formée peut en être retirée.

2. Dispositif (1) selon la revendication 1,
**caractérisé en ce**
**que** le second outil de formage externe entraîné de façon rotative (3.2) est agencé ensemble avec le premier outil de formage externe (3, 3.1) sur un axe commun de rotation (R), surtout dans lequel l'entraînement (4) est un entraînement commun (4) pour entraîner le premier outil de formage externe (3, 3.1) et le second outil de formage externe (3.2).

3. Dispositif (1) selon la revendication 1 ou 2,
**caractérisé en ce**
**que** le premier dispositif porte-pièce est configuré de telle sorte que la première pièce à usiner (2) entre un premier appui de pièce à usiner (16, 16.1) et un premier contre-appui de pièce à usiner (7, 7.1) peut être serrée axialement dans la direction du premier axe de la pièce à usiner (X, X.1), dans lequel le premier appui de pièce à usiner (16, 16.1) et le premier contre-appui de pièce à usiner (7, 7.1) sont mobiles axialement le long du premier axe de la pièce à usiner (X, X.1) par rapport au premier outil de formage externe (3, 3.1).

4. Dispositif (1) selon l'une quelconque des revendications précédentes,
**caractérisé en ce**
**que** le second dispositif porte-pièce est configuré de sorte qu'une seconde pièce à usiner (2) entre un second appui de pièce à usiner (16.2) et un second contre-appui de pièce à usiner (7.2) peut être serrée axialement dans la direction du second axe de la pièce à usiner (X.2), dans lequel le second appui de pièce à usiner (16.2) et le second contre-appui de pièce à usiner (7.2) sont mobiles axialement le long du second axe de la pièce à usiner (X, X.2) par rapport au second outil de formage externe.

5. Dispositif (1) selon l'une quelconque des revendications précédentes,
**caractérisé en ce**
**que** le premier dispositif porte-pièce et le second dispositif porte-pièce sont agencés sur des côtés de l'entraînement (4) opposés l'un à l'autre.

6. Dispositif (1) selon l'une quelconque des revendications précédentes,
**caractérisé en ce**
**que** le premier outil de formage externe (3.1) et le second outil de formage externe (3.2) sont agencés sur un axe commun de rotation (R), dans lequel l'axe de rotation (R) s'étend à un angle aigu par rapport au premier et / ou au second axe de la pièce à usiner (X, X.1, X.2).

7. Dispositif (1) selon l'une quelconque des revendications précédentes,
**caractérisé en ce**
**que** le premier dispositif porte-pièce et le second dispositif porte-pièce sont configurés et agencés de sorte que les deux dispositifs porte-pièces utilisent une zone d'espace commune (15) pour recevoir au moins une partie de la pièce à usiner respective formée (2) et / ou du dispositif porte-pièce respectif, surtout dans lequel les contre-appuis des pièces à usiner (7.1, 7.2) des deux dispositifs porte-pièces sont mobiles dans la zone commune du support de la pièce, de préférence, dans lequel le premier dispositif porte-pièce et le second dispositif porte-pièce comportent un axe commun de la pièce à usiner (X).

8. Dispositif (1) selon l'une quelconque des revendications précédentes,
**caractérisé en ce**
**que** le dispositif comporte des outils de formage externes supplémentaires (19) appliquant au contour extérieur de la pièce à usiner respective (2), de préférence, dans le même plan perpendiculaire à l'axe de la pièce à usiner (X, X.1, X.2) comme le premier outil de formage externe (3, 3.1) et / ou le second outil de formage externe (3.2).

9. Dispositif (1) selon l'une quelconque des revendications précédentes,
**caractérisé en ce**
**que** le dispositif comporte une pluralité d'outils de formage externes (3.1, 3.2, 3.3) agencés l'un après l'autre le long du premier axe de la pièce à usiner (X, X.1) .

10. Dispositif (1) selon l'une quelconque des revendications précédentes,
**caractérisé en ce**
**que** le premier et / ou le second outil de formage externe (3, 3.1, 3.2) est pivotant pour l'avancement autour d'un axe d'avancement (Z).

11. Procédé pour le fluotournage des pièces à usiner (2) avec un dispositif (1) selon l'une quelconque des revendications précédentes,
dans lequel au moins un premier outil de formage externe rotatif (3, 3.1), surtout un rouleau de formage, est appliqué à un contour extérieur d'une première pièce à usiner de forme creuse (2), dans lequel le premier outil de formage externe (3, 3.1) coopère avec un premier outil de formage interne (6, 6.1), agencé à l'intérieur de la pièce à usiner (2), de sorte qu'entre le premier outil de formage interne (6, 6.1) et le premier outil de formage externe (3, 3.1) une zone de formage est formée, dans laquelle la matière de la première pièce à usiner (2) est amenée à couler par une pression exercée par les premiers outils de formage (3, 3.1, 6, 6.1),
dans lequel la première pièce à usiner (2) est mise en rotation autour d'un premier axe de la pièce à usiner (X, X.1) par le premier outil de formage externe (3, 3.1),
**caractérisé en ce**
**qu'**un second outil de formage externe rotatif (3.2), surtout un rouleau de formage, est appliqué à un contour extérieur d'une seconde pièce à usiner de forme creuse (2), dans lequel le second outil de formage externe coopère avec un second outil de formage (6.2), agencé à l'intérieur de la seconde pièce à usiner (2), de sorte qu'entre le second outil de formage interne (6.2) et le second outil de formage externe (3.2) une zone de formage est formée, dans laquelle la matière de la seconde pièce à usiner (2) est amenée à couler par une pression, exercée par les seconds outils de formage, dans lequel la seconde pièce à usiner (2) est mise en rotation autour d'un second axe de la pièce à usiner (X, X.2) par le second outil de formage externe (3.2), dans lequel la première et la seconde pièce à usiner (2) pendant le formage sont chacune reçues dans un premier ou un second dispositif porte-pièce, assigné au premier ou au second outil de formage externe (3.1, 3.2), et pendant le formage de la pièce à usiner dans l'un des dispositifs porte-pièces, la pièce à usiner est changée dans l'autre dispositif porte-pièce.

12. Procédé selon la revendication 11,
**caractérisé en ce**
**que** le second outil de formage externe rotatif est entraîné ensemble avec le premier outil de formage externe (3, 3.1) par un entraînement commun (4).

13. Procédé selon la revendication 11 ou 12,
**caractérisé en ce**
**que** la première pièce à usiner (2) et la seconde pièce à usiner (2) lors du formage sont déplacées dans la direction opposée le long du premier et / ou du second axe de la pièce à usiner (X, X.1, X.2).

14. Procédé selon l'une quelconque des revendications 11 à 13,
**caractérisé en ce**
**que** par la position relative du premier et / ou du second outil de formage interne (6, 6.1, 6.2) par rapport à l'outil de formage externe (3, 3.1, 3.2), coopérant avec l'outil de formage interne respectif le long de l'axe de la pièce à usiner (X, X.1, X.2), assigné à l'outil de formage interne respectif (6, 6.1, 6.2), le diamètre intérieur de la pièce à usiner (2), qui doit être fabriquée, est prédéfinie à la position respective de la zone de formage le long de l'axe respectif de la pièce à usiner (X, X.1, X.2).
